# EUROPEAN PATENT SPECIFICATION

(11) **EP 0 427 750 B1**
(45) Date of publication and mention of the grant of the patent: **16.06.1993**
(21) Application number: 89908527.8
(22) Date of filing: 20.07.1989
(51) Int. Cl.: A23C 9/15, A01J 11/10

(54) **PROCESS AND DEVICE FOR THE PRODUCTION OF MILK WITH A PREDETERMINED FAT CONTENT**
VERFAHREN UND VORRICHTUNG ZUR HERSTELLUNG VON MILCH MIT EINEM VORBESTIMMTEN FETTGEHALT
PROCEDE ET DISPOSITIF DE PRODUCTION DE LAIT A TENEUR PREDETERMINEE EN MATIERE GRASSE

(30) Priority: 21.07.1988 NL 8801848
(43) Date of publication of application: 22.05.1991
(73) Proprietor: STORK AMSTERDAM B.V., 1021 JX Amsterdam (NL)
(72) Inventor: VAN HOEK, Johannes, Wilhelmus, NL-1094 LK Amsterdam (NL); VAN SCHAGEN, Hans, Walter, NL-1405 EJ Bussum (NL)
(74) Representative: Barendregt, Frank, Drs.
(86) International application number: NL8900059
(87) International publication number: WO9000862

(56) References cited:
- DE-A- 2 628 225
- FR-A- 2 231 318
- Deutsche Molkerei-Zeitung DMZ, vol. 108, n 30, 23 July 1987 (Munich, DE) F. Hellström "Die richtige Standardisierungstechnik verbessert die Wirtschaftlichkeit", pages 977-970
- Voedingsmiddelentechnilogie, vol. 8, n 35, 27 August 1975 "Apparatuur voor automatische continu-standaardisatie van het vetgehalte in melk", pages 11-13

## Description

The present invention relates to a process for the production of milk and cream with a predetermined fat content.

Such a process is per se known from Deutsche Molkerei-Zeitung, vol. 108, no. 30, 1987 (DMZ) and Voedingsmiddelentechnologie, vol. 8, no. 35, 27 augustus 1975, blz. 11-13 (VMT). DMZ descibes a process in which raw milk is fed to a centrifuge, in which the milk is separated in a high-fat and low-fat fraction. Part of the high-fat fraction is added to the low-fat fraction and the excess high-fat fraction and standardized milk are discharged. The fat content in the high-fat fraction is measured by a density meter. Further the volume flow in the high-fat fraction, in the low-fat fraction and in the connecting pipe, through which an amount of the high-fat fraction is added to the low-fat fraction, is measured. The total flow of the high-fat fraction is controlled by one valve. The addition of high-fat fraction to the low-fat fraction is controlled by a valve which controls the discharge of the high-fat fraction. In the connecting pipe between the high-fat and low-fat fractions there is provided a valve with a fixed setting. The disadvantage of this process is that the pressure in the high-fat fraction near the connecting pipe is not maximal and is affected by the flow through the valve in the high-fat fraction before the connecting pipe, the flow through the valve in the high-fat fraction after the connecting pipe and the flow through the valve in the connecting pipe itself, which has fixed settings. This means that the pressure in the high-fat fraction near the connecting pipe is also influenced by variations in the high-fat fraction discharge and standardized milk discharge.

VMT describes a similar process. The pressure in the high-fat fraction near the connecting pipe is also not maximal as this is again controlled by a valve in the high-fat fraction before the connecting pipe. The addition of high-fat fraction to the low-fat fraction is controlled by a valve in the high-fat fraction after the connecting pipe, a control valve in the connecting pipe and a valve in the connecting pipe with fixed settings. This process is adversely affected by variations in the high-fat fraction discharge.

The present invention has the object to provide an improved process, which does not have the disadvantages according to the prior art. According to the invention a process is provided for the production of milk and cream with a predetermined fat content, in which raw milk is separated by a centrifuge into a high-fat fraction (cream) an a low-fat fraction (skimmed milk), in which the fat content in the high-fat fraction is determined and the fat content in the low-fat fraction is kept at a negligibly low level, the volume flow of the low-fat and high-fat fraction is determined and a specific part of the high-fat fraction is then added to the low-fat fraction for obtaining milk of the desired fat content (standardized milk), and the remaining part of the high-fat fraction (cream) is drained off through a control valve, in which the part of the high-fat fraction added to the low-fat fraction is regulated by means of a control valve which in conjunction with the control valve for discharge of the remaining part of the high-fat fraction is controlled on the basis of the volume flow of the low-fat fraction, on the basis of the volume flow of the part of the high-fat fraction added to the low-fat fraction, on the basis of the volume flow, and the density measurement of the high-fat fraction, before the addition to the low-fat fraction, in such a way that the density of the high-fat fraction - and thus the fat content - is maintained at a set value.

By means of the two control valves the ratio between the quantity of cream to be added to the low-fat fraction and the quantity of cream to be discharged can be set without the pressure in the high-fat fraction thereby being affected. The pressure in the high-fat fraction is controlled by the two valves on the basis of the density measurement, which again indicates a measure of the fat content. Since the pressure in the high-fat fraction is thus held constant, the centrifuge remains in the same working point.

If the standardized milk is conveyed to a homogenizer, it is advantageous according to the invention for the raw milk to be conveyed to the centrifuge via a control valve which is controlled in such a way that the pressure in the discharge pipe for the low-fat fraction remains constant With the use of a homogenizer it is a requirement that the volume flow to the homogenizer should be constant. The pressure in the low-fat fraction is thus stabilized using this regulable valve.

The invention is also embodied in a device for the application of the process, comprising a centrifuge with a supply pipe for the raw milk and a discharge pipe for the high-fat fraction and a discharge pipe for the low-fat fraction, a connecting pipe which connects the discharge pipe for the high-fat fraction to the discharge pipe for the low-fat fraction, a densimeter and a volume flow meter in the pipe for the high-fat fraction in the region between the centrifuge and the connecting pipe, and a control valve in the discharge pipe for the high-fat fraction, disposed downstream of the connection of the connecting pipe, viewed in the direction of flow, a volume flow meter in the connecting pipe, and a volume flow meter in the discharge pipe for the low-fat fraction in the region between the centrifuge and the connection of the connecting pipe, in which
the connecting pipe is provided with a control valve which together with the control valve in the discharge pipe of the high-fat fraction is connected to a control element which controls the two control valves on the basis of the measured value of the three volume flow meters and of the densimeter in the pipe for the high-fat fraction, in such a way that the density, and thus the fat content, in the high-fat fraction remains constant.

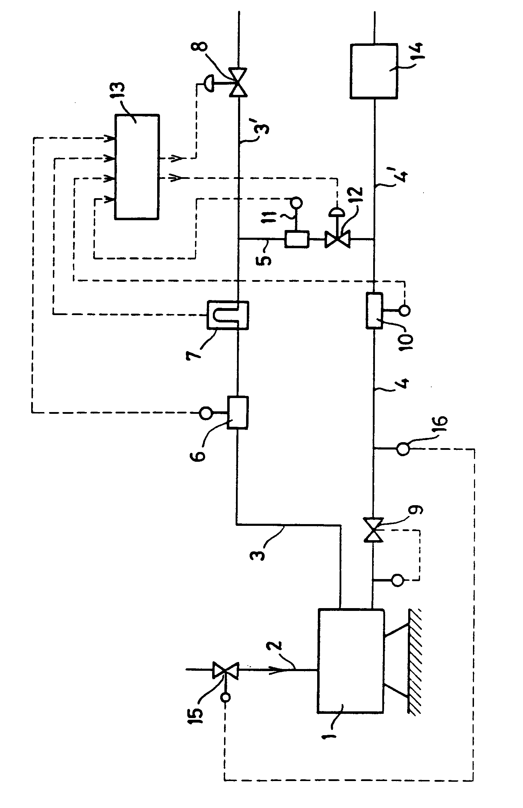

The invention is explained in greater detail with reference to the drawing, which shows an example of an embodiment of the device according to the invention in a single figure.

In the figure reference number 1 indicates a centrifuge, to which a supply pipe 2 for raw milk and a discharge pipe 3 for the high-fat fraction (cream) and a discharge pipe 4 for the low-fat fraction are connected. The discharge pipes 3 and 4 are connected to each other by means of a connecting pipe 5, which divides each of the discharge pipes 3 and 4 into two sections 3, 3' and 4, 4'.

A volume flow meter 6 and a densimeter 7 are incorporated in the discharge pipe 3 between the centrifuge 1 and the connection of the connecting pipe 5, while a control valve 8 is disposed downstream of the connecting pipe 5.

A pressure-controlled valve 9 for setting the working point of the centrifuge and a volume flow meter 10 are disposed in the discharge pipe 4 for the low-fat fraction between the centrifuge and the connection of the connecting pipe.

Finally, a volume flow meter 11 and a control valve 12 are provided in the connecting pipe 5.

The device is provided with a control element 13 which controls the two control valves 8 and 12 on the basis of measured values coming from the volume flow meters 10 and 11 and from the densimeter 7. The two control valves thus have a dual purpose. On the one hand, they regulate the amount of cream conveyed through the connecting pipe 5 to the low-fat fraction and, on the other, these two control valves keep the fat content in the cream constant by means of the densimeter 7.

A change in the fat content in the high-fat fraction will generally be reflected in a change in the volume flow of the high-fat fraction. Such a change will be detected by the densimeter 7 with some time lag. In order to be able to make the control element 13 react more quickly to such a change, provision is made for the volume flow meter 6, which emits a signal to the control element, so that when the fat content is changed the control element can react more quickly to it.

It will be clear that the volume flow meters 6 and 10 and 11 can also be provided in a different way in the pipes, in such a way that the volume flow can be derived or calculated in each of the pipes or pipe sections.

If the standardized milk is fed to a homogenizer 14 disposed in the pipe section 4' before being discharged, it is necessary to keep the volume flow in the pipe section 4' constant. For this purpose, provision is made in the raw milk supply pipe connected to the centrifuge for a control valve 15 which is controlled by means of a pressure recorder 16 disposed in the pipe 4, in order to keep the pressure in this pipe at a constant value.

By means of the device described above it is thus possible to produce both cream and standardized milk with predetermined fat percentages. Since the control is designed in such a way that the action of the centrifuge is not thereby affected, a very rapid control is possible, with a sufficiently high pressure difference between the high-fat fraction and the low-fat fraction being maintained for it to be possible always to add an adequate required quantity of cream via the pipe 5 to the low-fat fraction so that the device has a wide control range.

## Claims

1. Process for the production of milk and cream with predetermined fat content, in which raw milk is separated by a centrifuge into a high-fat fraction (cream) and a low-fat fraction (skimmed milk), in which the fat content in the high-fat fraction is determined and the fat content in the low-fat fraction is kept at a negligibly low level, the volume flow of the low-fat and high-fat fraction is determined, and a specific part of the high-fat fraction is then added to the low-fat fraction for obtaining milk of the desired fat content (standardized milk), and the remaining part of the high-fat fraction (cream) is drained off through a control valve (8), in which the part of the high-fat fraction added to the low-fat fraction is regulated by means of a control valve (12) which in conjunction with the control valve (8) for discharge of the remaining part of the high-fat fraction is controlled on the basis of the volume flow (10) of the low-fat fraction, on the basis of the volume flow (11) of the part of the high-fat fraction added to the low-fat fraction, on the basis of the volume flow (6), and the density measurement (7) of the high-fat fraction, before the addition to the low-fat fraction in such a way that the density of the high-fat fraction - and thus the fat content - is maintained at a set value.

2. Process according to Claim 1, in which the standardized milk is conveyed to a homogenizer (14), and the raw milk is fed to the centrifuge (1) via a control valve (15) which is controlled in such a way that the pressure in the discharge pipe (4) for the low-fat fraction remains constant.

3. Device for the application of the process according to one of the preceding claims, comprising a centrifuge (1) with a supply pipe (2) for the raw milk and a discharge pipe (3) for the high-fat fraction and a discharge pipe (4) for the low-fat fraction, a connecting pipe (5) which connects the discharge pipe (3) for the high-fat fraction to the discharge pipe (4) for the low-fat fraction, a densimeter (7) and a volume flow meter (6) in the pipe (3) for the high-fat fraction in the region between the centrifuge (1) and the connecting pipe (5) and a control valve (8) in the discharge pipe (3') for the high-fat fraction, disposed downstream of the connection of the connecting pipe (5), viewed in the direction of flow, a volume flow meter (11) in the connecting pipe (5), and a volume flow meter (10) in the discharge pipe (4) for the low-fat fraction in the region between the centrifuge (1) and the connection of the connecting pipe (5), in which the connecting pipe (5) is provided with a control valve (12) which together with the control valve (8) in the discharge pipe (3') of the high-fat fraction is connected to a control element (13) which controls the two control valves (8, 12) on the basis of the measured value of the three volume flow meters (6, 10, 11) and of the densimeter (7) in the pipe (3) for the high-fat fraction in such a way that the density and thus the fat content in the high-fat fraction remains constant.

4. Device according to Claim 3, in which the standardized milk is conveyed to a homogenizer (14), and a control valve (15) is accomodated in the supply pipe (2) for raw milk to the centrifuge (1), said control valve (15) being controlled by means of the pressure in the discharge pipe (4) for the low-fat fraction in order to keep this pressure constant.

## Patentansprüche

1. Verfahren zur Herstellung von Milch und Sahne mit vorbestimmten Fettgehalt, bei dem Rohmilch mittels einer Zentrifuge in eine Fraktion mit hohem Fettanteil (Sahne) und eine Fraktion mit geringem Fettanteil (Magermilch) getrennt wird, wobei der Fettgehalt in der Fraktion mit hohem Fettanteil bestimmt wird und der Fettgehalt in der Fraktion mit geringem Fettanteil auf einem vernachlässigbar geringem Niveau gehalten wird, der Volumenfluß der Fraktionen mit geringem Fettanteil und mit hohem Fettanteil bestimmt wird und ein spezifischer Teil der Fraktion mit hohem Fettanteil dann der Fraktion mit geringem Fettanteil zugegeben wird, um Milch mit dem gewünschten Fettgehalt (standardisierte Milch) zu erhalten, und der restliche Teil der Fraktion mit hohem Fettanteil (Sahne) durch ein Steuerventil (8) abgeleitet wird, wobei der Teil der Fraktion mit hohem Fettanteil, der der Fraktion mit geringem Fettanteil zugegeben wird, mittels eines Steuerventils (12) geregelt wird, welches in Verbindung mit dem Steuerventil (8) zum Ablassen des restlichen Teils der Fraktion mit hohem Fettanteil auf der Grundlage des Volumenflusses (10) der Fraktion mit geringem Fettanteil, auf der Grundlage des Volumenflusses (11) des Teils der Fraktion mit hohem Fettanteil, der der Fraktion mit geringem Fettanteil zugegeben wird, auf der Grundlage des Volumenflusses (6) und der Dichtemessung (7) der Fraktion mit hohem Fettanteil vor Zugabe zu der Fraktion mit geringem Fettanteil auf eine derartige Art und Weise gesteuert wird, daß die Dichte der Fraktion mit hohem Fettanteil - und somit der Fettgehalt - auf einem festen Wert gehalten wird.

2. Verfahren gemäß Anspruch 1, worin die standardisierte Milch einem Homogenisierapparat (14) zugeführt wird, und die Rohmilch mittels eines Steuerventiles (15) der Zentrifuge (1) zugeführt wird, welches so gesteuert wird, daß der Druck in der Ablaßleitung (4) für die Fraktion mit geringem Fettanteil konstant bleibt.

3. Vorrichtung zur Anwendung des Verfahrens gemäß einem der voranstehenden Ansprüche, umfassend eine Zentrifuge (1) mit einer Zufuhrleitung (2) für die Rohmilch und eine Ablaßleitung (3) für die Fraktion mit hohem Fettanteil und eine Ablaßleitung (4) für die Fraktion mit geringem Fettanteil, eine Verbindungsleitung (5), welche die Ablaßleitung (3) für die Fraktion mit hohem Fettanteil mit der Ablaßleitung (4) für die Fraktion mit geringem Fettanteil verbindet, ein Densimeter (7) und ein Volumenflußmeßgerät (6) in der Leitung (3) für die Fraktion mit hohem Fettanteil im Bereich zwischen der Zentrifuge (1) und der Verbindungsleitung (5) und ein Steuerventil (8) in der Ablaßleitung (3') für die Fraktion mit hohem Fettanteil, welches in Flußrichtung gesehen stromabwärts von der Verbindung der Verbindungsleitung (5) angeordnet ist, ein Volumenflußmeßgerät (11) in der Verbindungsleitung (5) und einem Volumenflußmeßgerät (10) in der Ablaßleitung (4) für die Fraktion mit geringem Fettanteil im Bereich zwischen der Zentrifuge (1) und der Verbindung der Verbindungsleitung (5), wobei die Verbindungsleitung (5) mit einem Steuerventil (12) versehen ist, welches zusammen mit dem Steuerventil (8) in der Ablaßleitung (3') der Fraktion mit hohem Fettanteil mit einem Steuerelement (13) verbunden ist, welches die zwei Steuerventile (8, 12) auf der Grundlage des gemessenen Wertes der drei Volumenflußmeßgeräte (6, 10, 11) und des Densimeters (7) in der Leitung (3) für die Fraktion mit hohem Fettanteil auf derartige Art und Weise steuert, daß die Dichte, und somit der Fettgehalt, in der Fraktion mit hohem Fettanteil konstant bleibt.

4. Vorrichtung gemäß Anspruch 3, worin die standardisierte Milch einem Homogenisierapparat (14) zugeführt wird und ein Steuerventil (15) in der Zufuhrleitung (2) für die Rohmilch an die Zentrifuge (1) angeordnet ist, wobei das Steuerventil (15) mittels des Druckes in der Ablaßleitung (4) für die Fraktion mit geringem Fettanteil gesteuert wird, um diesen Druck konstant zu halten.

## Revendications

1. Procédé pour la production de lait et de crème ayant une teneur prédéterminée en matière grasse, dans lequel le lait brut est séparé par une centrifugeuse en une fraction riche en matière grasse (crème) et une fraction pauvre en matière grasse (lait écrémé), dans lequel la teneur en matière grasse de la fraction riche en matière grasse est déterminée et la teneur en matière grasse de la fraction pauvre en matière grasse est maintenue à un niveau faible négligeable, les débits de la fraction riche en matière grasse et de la fraction pauvre en matière grasse sont déterminés, et une partie spécifique de la fraction riche en matière grasse est ensuite ajoutée à la fraction pauvre en matière grasse pour obtenir un lait ayant la teneur désirée en matière grasse (lait normalisé), et la partie restante de la fraction riche en matière grasse (crème) est évacuée par une vanne de commande (8), dans lequel la partie de la fraction riche en matière grasse ajoutée à la fraction pauvre en matière grasse est régulée au moyen d'une vanne de commande (12) qui, en association avec la vanne de commande (8) pour la décharge de la partie restante de la fraction riche en matière grasse, est commandée en fonction du débit (10) de la fraction pauvre en matière grasse, en fonction du débit (11) de la partie de la fraction riche en matière grasse ajoutée à la fraction pauvre en matière grasse, en fonction du débit (6), et de la mesure de densité (7) de la fraction riche en matière grasse, avant addition à la fraction pauvre en matière grasse de telle sorte que la densité de la fraction riche en matière grasse, et donc la teneur en matière grasse, soit maintenue à une valeur donnée.

2. Procédé suivant la revendication 1, dans lequel le lait normalisé est transporté vers un homogénéiseur (14), et le lait brut est introduit dans la centrifugeuse (1) par l'intermédiaire d'une vanne de commande (15) qui est commandée de telle sorte que la pression régnant dans le conduit de décharge (4) pour la fraction pauvre en matière grasse, reste constante.

3. Dispositif pour l'application du procédé suivant l'une quelconque des revendications précédentes, comprenant une centrifugeuse (1) avec un conduit d'alimentation (2) pour le lait brut et un conduit de décharge (3) pour la fraction riche en matière grasse et un conduit de décharge (4) pour la fraction pauvre en matière grasse, un conduit de raccordement (5) qui relie le conduit de décharge (3) pour la fraction riche en matière grasse au conduit de décharge (4) pour la fraction pauvre en matière grasse, un densitomètre (7) et un débitmètre (6) dans le conduit (3) pour la fraction riche en matière grasse dans la région comprise entre la centrifugeuse (1) et le conduit de raccordement (5) et une vanne de commande (8) dans le conduit de décharge (3') pour la fraction riche en matière grasse, disposée en aval de la jonction du conduit de raccordement (5), par rapport à la direction de l'écoulement, un débitmètre (11) dans le conduit de raccordement (5), et un débitmètre (10) dans le conduit de décharge (4) pour la fraction pauvre en matière grasse, situé dans la région comprise entre la centrifugeuse (1) et la jonction du conduit de raccordement (5), dans lequel le conduit de raccordement (5) est pourvu d'une vanne de commande (12) qui, de même que la vanne de commande (8) dans le conduit de décharge (3') de la fraction riche en matière grasse, est réunie à un élément de pilotage (13) qui contrôle les deux vannes de commande (8, 12) en fonction des valeurs mesurées dans les trois débitmètres (6, 10, 11) et le densitomètre (7) dans le conduit (3) pour la fraction riche en matière grasse, de telle sorte que la densité et donc la teneur en matière grasse dans la fraction riche en matière grasse, reste constante.

4. Dispositif suivant la revendication 3, dans lequel le lait normalisé est transporté vers un homogénéiseur (14) et une vanne de commande (15) est située dans le conduit d'alimentation (2) conduisant le lait brut à la centrifugeuse (1), cette vanne de commande (15) étant commandée par la pression dans le conduit de décharge (4) pour la fraction pauvre en matière grasse afin de maintenir cette pression constante.
